# EUROPEAN PATENT SPECIFICATION

(11) **EP 3 240 395 B1**
(45) Date of publication and mention of the grant of the patent: **02.06.2021**
(21) Application number: 14909516.8
(22) Date of filing: 31.12.2014
(51) Int. Cl.: A01D 34/78, A01D 34/82, H02P 4/00, A01D 34/68, A01D 69/02

(54) **ACTUATION CONTROL MECHANISM FOR POWER TOOL**
BETÄTIGUNGSSTEUERUNGSMECHANISMUS FÜR ELEKTROWERKZEUG
MÉCANISME DE COMMANDE D'ACTIONNEMENT POUR OUTIL ÉLECTRIQUE

(43) Date of publication of application: 08.11.2017
(73) Proprietor: Techtronic Industries Company Limited, Tsuen Wan New Territories Hong Kong (CN)
(72) Inventor: YANG, Zhaoyun, Dongguan, Guangdong (CN); GUO, Jianzhong, Dongguan, Guangdong (CN)
(74) Representative: Grünecker Patent- und Rechtsanwälte PartG mbB
(86) International application number: PCT/CN2014/095963
(87) International publication number: WO 2016/106708

(56) References cited:
- EP-A1- 2 025 217
- EP-A1- 2 025 217
- EP-A1- 2 447 967
- EP-A2- 0 853 354
- EP-A2- 1 512 319
- CN-A- 1 589 601
- CN-U- 204 013 292
- CN-U- 204 013 292
- CN-Y- 2 764 127
- CN-Y- 201 256 557
- US-A1- 2008 284 363

## Description

### TECHNICAL FIELD

The present invention relates to an actuation control mechanism for a power tool and particularly, although not exclusively, to an actuation control mechanism for a hybrid AC/DC power tool such as a walk-behind type lawn mower.

### BACKGROUND

A power tool typically operates with a motor or a combustion engine, utilizing electricity or gas/fuel, for driving a tool element so as to perform different kinds of work operation such as cutting, grinding, drilling, sanding, polishing, etc. Of the two types of power tools, electric power tools are more preferable in some applications compared with gaseous/fuel type power tools, as they are relatively easy to handle and operate.

In the past, electrical power tools operate with either AC power or DC power but not both. Specifically, DC power tools generally utilize a battery pack operably connected with the power tool for powering the motor; whereas AC power tools generally utilize AC mains power from the mains socket for powering the motor. To operate an AC or DC electric power tool, a operator will generally have to switch on a power switch arranged on the power tool by pressing the power switch once so as to connect the electric power source with the motor to power the motor. In some alternative designs, the power tool includes a trigger-type power switch that needs to be continuously actuated by the operator for operating the tool.

Hybrid type power tools have recently been developed. Unlike the conventional power tools that operate with only DC power or only AC power, hybrid type power tools include a circuit and motor arrangement that is operable with either AC power or DC power. Thus, compared with traditional DC-only or AC-only power tools, hybrid type power tools are more versatile as they are adapted for both corded operation using AC power (particularly desirable for high load/power operations), and cordless operation using DC battery pack (when portability of the tool is desired). On the other hand, however, existing hybrid type power tools require more complex operation and control circuitries and are often more difficult to operate compared with traditional DC-only or AC-only power tools.

Attention is drawn to the disclosures of EP1,512,319, EP2,025,217, EP2,447,967, EP0,853,354 and CN204 013 292.

### SUMMARY OF THE INVENTION

In accordance with a first aspect of the present invention, there is provided a power tool as claimed in claim 1.

Preferable features are set out in the independent claims.

### BRIEF DESCRIPTION OF THE DRAWINGS

Embodiments of the present invention will now be described, by way of example, with reference to the accompanying drawings in which:
Figure 1 is a perspective view of a lawn mower in accordance with one embodiment of the present invention;
Figure 2A is a side view of the lawn mower of Figure 1;
Figure 2B is a bottom view of the lawn mower of Figure 1;
Figure 2C is a top view of the lawn mower of Figure 1;
Figure 3A is a perspective view of a handle part of the lawn mower of Figure 1;
Figure 3B is another view of the handle part of Figure 3A;
Figure 4 is a partially exploded view of the handle part of Figures 3A and 3B;
Figure 5 is an exploded view showing an actuation control mechanism arranged in the handle part of Figures 3A and 3B in accordance with one embodiment of the present invention;
Figures 6A and 6B illustrates the operation of the actuation control mechanism of the handle part of the lawn mower of Figure 1 in accordance with one embodiment of the present invention; and
Figure 7 is a circuit diagram showing a control circuit associated with the actuation control mechanism for the lawn mower of Figure 1 in accordance with one embodiment of the present invention.

### DETAILED DESCRIPTION OF THE PREFERRED EMBODIMENT

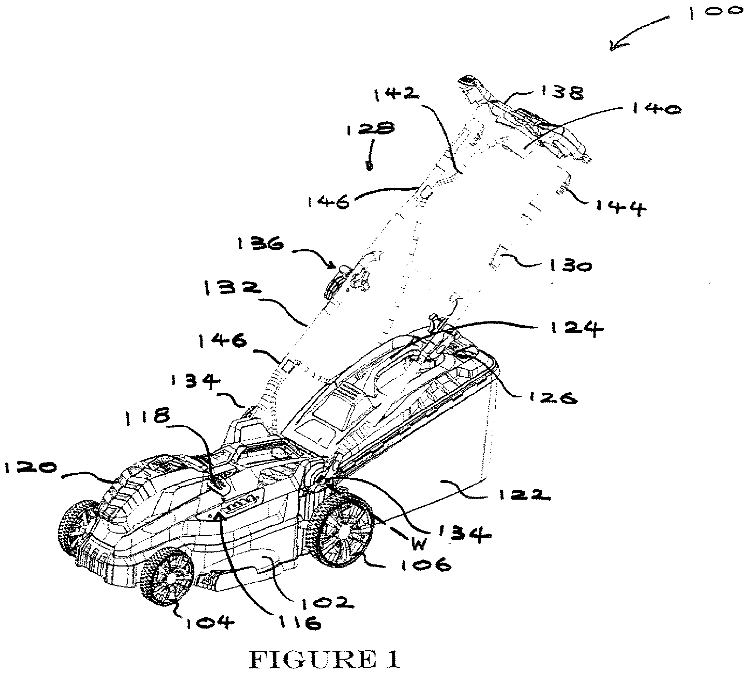

Referring to Figure 1, there is provided a power tool, comprising: a motor arranged to drive a work element; a control circuit having a first switch arrangement for selectively coupling the motor with a power source; a first actuator and a plurality of second actuators operable to be actuated by an operator of the power tool for actuating the first switch arrangement; characterized in that: both the first actuator and any one of the plurality of second actuators have to be actuated for actuating the first switch arrangement which couples the motor with the power source and enables power to be supplied from the power source to the motor; and the plurality of second actuators are accessible from at least two different angles and/or positions by the operator.

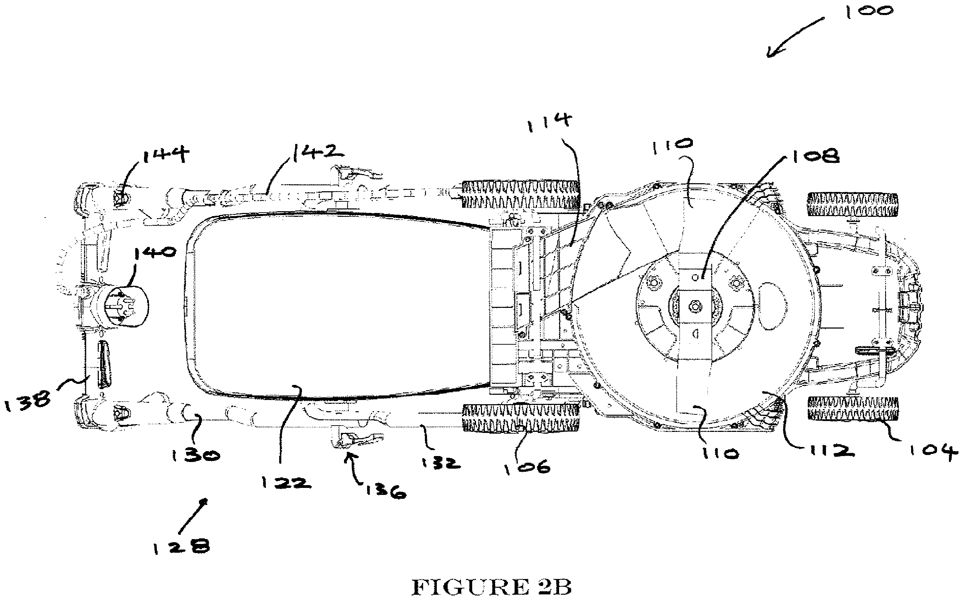

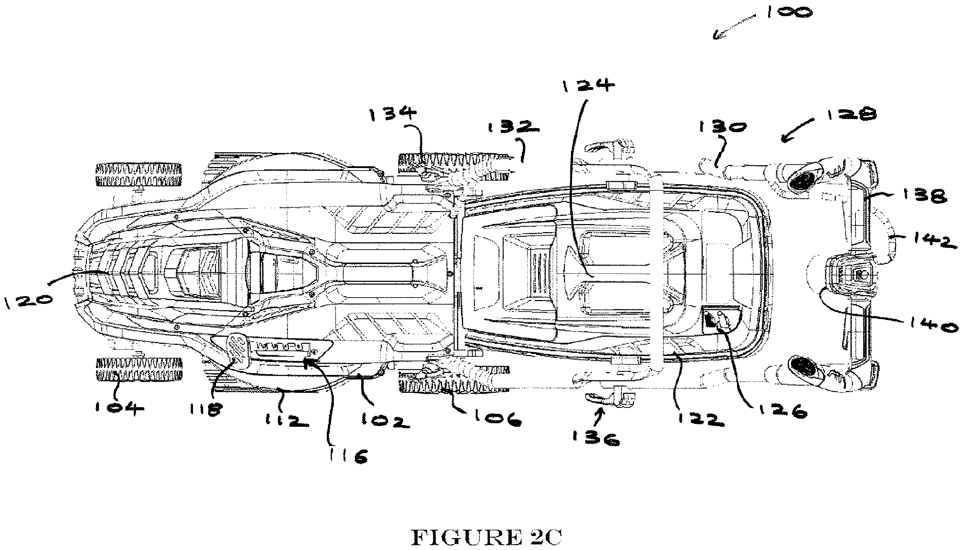

Figures 1-2C show a power tool in the form of a hybrid AC/DC walk-behind type lawn mower 100 in accordance with one embodiment of the present invention. As shown in Figures 1-2C, the mower 100 includes a main body 102 coupled with a pair of front wheels 104 and a pair of rear wheels 106. Preferably, a motor (not shown) is arranged inside the main body 102, and the motor shaft of the motor is operably coupled with a cutting blade 108 for cutting grass. As shown in Figure 2B, the cutting blade 108 in the present embodiment is a substantially elongated blade with two opposite cutting vanes 110 and it is arranged on an underside of the main body 102. When the mower 100 is moving or resting on a floor surface, the cutting blade 108 is arranged in close proximity to and parallel to the floor surface for cutting grass. A blade shroud 112 for the cutting blade 108 is also arranged on the underside of the main body 102. The blade shroud 112 in the present embodiment includes a guiding arrangement 114 for guiding the cut grass into the main body 102.

In one embodiment, the mower 100 includes a height adjustment lever mechanism 116 arranged in the main body 102 for controlling a ride height of the mower 100 and hence the height of the cutting blade 108 with respect to the floor surface. The height adjustment lever mechanism 116 allows the blade height to be adjusted so that different lengths of grass can be efficiently cut by the cutting blade 108. In the present embodiment, the height adjustment lever mechanism 116 includes a pedal or an actuating lever 118 arranged on one side of an upper surface of the main body 102 and it can easily manipulated by the operator for blade height control.

A control circuit (not shown) for controlling the power and operation of the motor of the mower 100 is at least partly arranged inside the main body 102. In one embodiment, the control circuit electrically connects the motor with a power source, and controls the supply of power from the power source to the motor. In the present embodiment, the mower 100 is a hybrid AC/DC type mower which has a hybrid AC/DC motor that can operate with AC power in AC mode and with DC power in DC mode. The power source in the present embodiment may be an AC power source (e.g. AC mains power) or a DC power source (e.g. a battery pack). Details of the control circuit will be discussed further below.

In the present embodiment, a pivotable door 120 is arranged on the upper front portion of the main body 102 of the mower 100. The pivotable door 120 preferably encloses the power chamber of the mower 100. In one embodiment, the power chamber includes a number of power connection ports that function as switches operably connected in the control circuit. These power connection ports are operable to control the power supplied from the power source to the motor. Preferably, these power connection ports include ports for connecting one or more DC battery pack, and ports for connecting with one or more electrical coupling key member such as a fuse key.

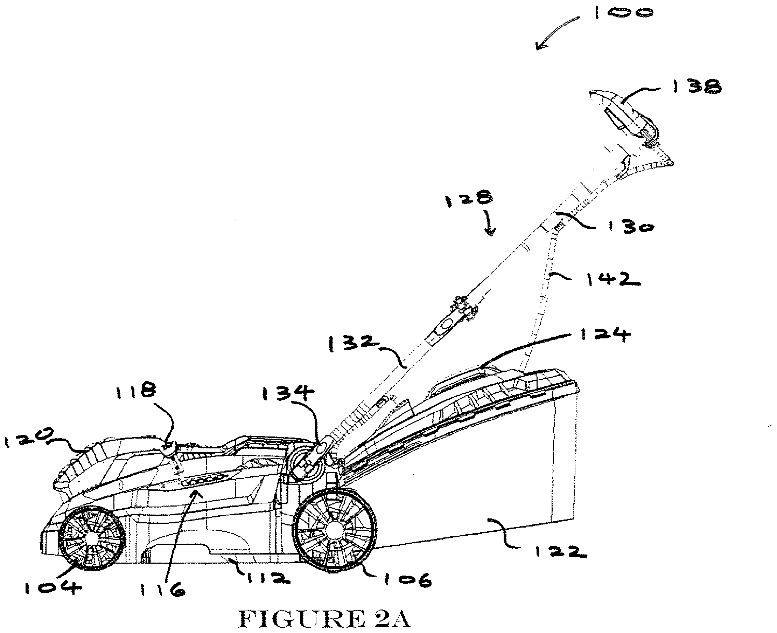

As shown in Figures 1-2C, a grass storage box 122 for storing grass being cut is detachably connected at a rear end of the main body 102. Any types of mechanical or electrical coupling means may be used to detachably mount the grass storage box 122 to the main body 102 of the mower 100. The grass storage box 122 includes a handle portion 124 which allows the box to be easily manipulated by the operator. Figure 2A shows that the bottom surface of the grass storage box 122 is at an angle to the floor surface and is not parallel with a base of the main body 102. Preferably, the grass storage box 122 includes an opening (not shown) arranged on the front surface for communication with a corresponding rear opening of the main body 102. As the grass is being cut by the cutting blade 108, the grass enters the main body 102 under the guidance of the guiding arrangement 114 of the blade shroud 112, and is subsequently stored in the grass storage box 122. In one embodiment, the grass storage box 122 may also include a grass storage box full indicator 126 for indicating whether the box 122 is fully loaded with grass. The grass storage box full indicator 126 may be a mechanical indicator, a visual indicator or any other types of electrical indicators. Whenever the grass storage box full indicator 126 indicates that the grass storage box 122 is full, the operator may detach the grass storage box 122 from the main body 102 to empty the grass stored within the grass storage box 122. In some alternative embodiments, the mower 100 may not include any grass storage box 122 and the rear end opening of the main body 102 is enclosed using a mulching plug (not shown) so that the cut grass will not enter the main body.

With continuous reference to Figures 1-2C, the mower 100 in the present embodiment further includes a handle assembly 128 that is pivotably connected to the main body 102 about a pivot axis W arranged on the main body 102. The handle assembly 128, in one embodiment, is pivotable between an operation position and a storage position. In the operation position, the handle assembly 128 is arranged as shown in Figures 1-2C to be operated by an operator to maneuver the lawn mower 100 along a floor surface for grass cutting operations. In the storage position, the handle assembly 128 is folded against the main body 102 to provide compact storage of the lawn mower 100.

The handle assembly 128 preferably includes an upper handle frame 130 operably coupled with a lower handle frame 132 that is in turn coupled to the main body 102. Both the upper and lower handle frames 130, 132 resume a substantially U-shaped structure in the present invention. A pivot lock mechanism 134 is preferably arranged at (each of) the lower ends of the lower handle frame 132 so as to securely couple the lower handle frame 132 to the main body 102 and to restrain the pivoting motion of the handle assembly 128 so as prevent unwanted pivoting of the handle assembly 128 during operation or storage.

Preferably, the handle assembly 128 is telescopic or adjustable so as to allow the length of the handle assembly 128 to be suitably adjusted for different operations or operators with different arm lengths and height. Specifically, in this embodiment, the upper handle frame 130 is coupled to the lower handle frame 132 through an adjustment means 136 arranged at both sides of the frames 130, 132. In the present embodiment, the adjustment means 136 comprises holes formed on the upper ends of the lower handle frame, holes formed on the lower ends of the upper handle frame, and a pair of handles with locking pins that extend through any of the holes in both the upper and lower handle frames. Different combinations of holes of the upper and lower handle frames 130, 132 provide different extent of extension of the handle assembly 128.

The upper handle frame 130 is adjustably mounted to the lower handle frame 132 through the locking pins and holes arrangement 136 as described above. In the present embodiment, the upper handle frame 130 includes a handle part 138 at its uppermost end. The handle part 138 is also substantially U shaped, but is formed on a plane that is substantially perpendicular to the U-shaped plane of the upper handle frame 130. A plurality of buttons and triggers are arranged on the handle part 138 for operating the mower. An AC power port 140 with a circular shroud is arranged in the middle of the handle part 138. The AC power port 140 is operable to receive a power plug of an extension cord, with the other end of the extension cord having another plug coupled directly with an AC mains power source. In one embodiment, part of the control circuit is arranged in the handle part 138, and that part of the control circuit is operably connected with the other parts of the control circuit in the main body through an exposed motor control cable 142. In the present embodiment, a pair of cord hooks 144 is arranged on an underside of the upper handle frame 130 for mounting or winding the extension cord of the AC power connection line.

The motor control cable 142 extends from the handle part 138 to the main body 102 to electrically couple the AC power port 140 in the handle part 138 with the control circuit in the main body. A pair of cord retainers 146, one arranged on one side of the upper handle frame 130 and the other arranged on the same side of the lower handle frame 132, is provided for retaining the motor control cable 142 and to prevent dangling of the cable.

Whilst the basic construction of the lawn mower 100 in one embodiment is described in detail with reference to the figures, it should be appreciated that variations and modifications of the features described are possible. In some embodiments, not all of the above described features may be present in the mower 100. Alternatively, the mower 100 is capable of having other additional features which facilitates its operation and aids control by the operator.

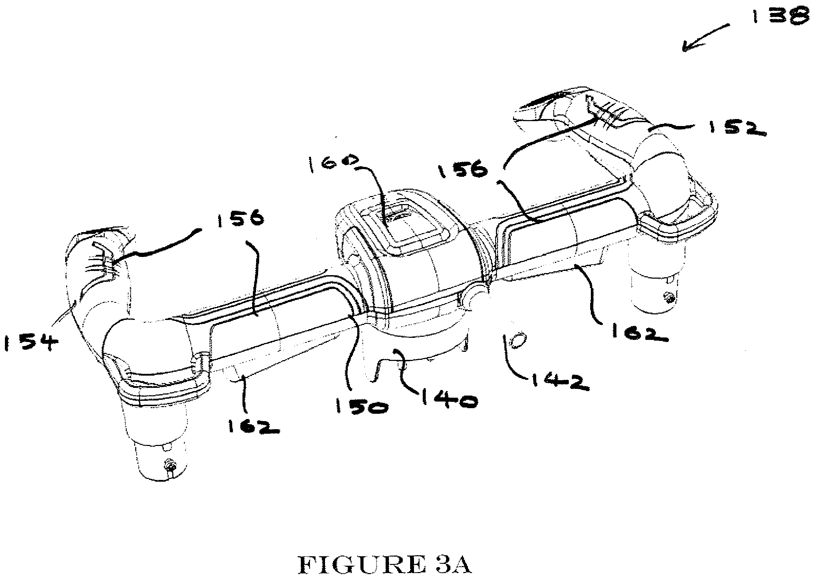

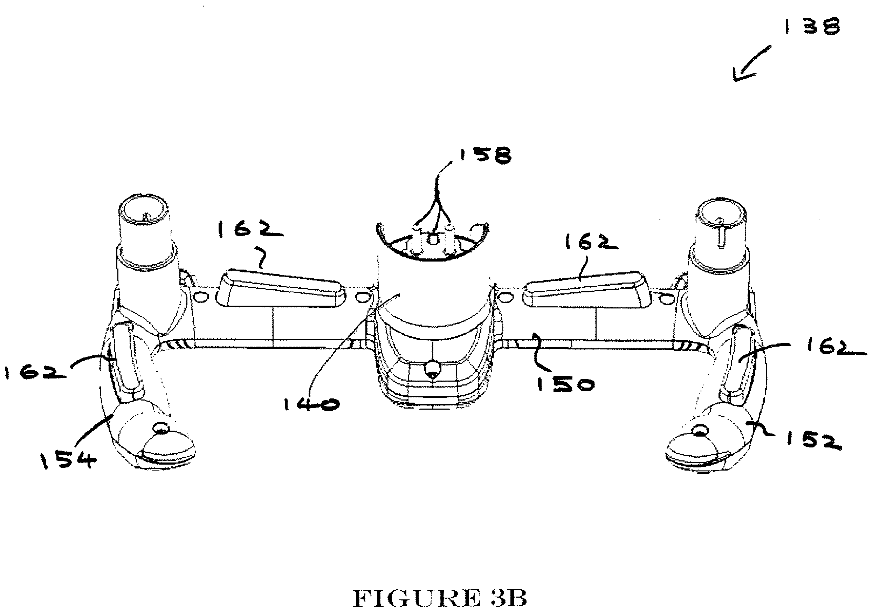

Figures 3A and 3B specifically illustrate the construction of the handle part 138 of the upper handle frame 130 of the mower 100 in Figures 1-2C. The handle part 138 includes a substantially U-shaped body, and it comprises a first elongated main handgrip portion 150 and two perpendicularly extending second and third handgrip portions 152, 154 extending from two ends of the first handgrip portion 150. A number of gripping surfaces 156 are arranged on the handgrip portions 150, 152, 154 to provide a comfortable frictional gripping surface to facilitate gripping of the handgrip portions 150, 152, 154 by the operator. As described above, an AC power port 140 is provided in the middle of the first handgrip portion 150. As shown in Figure 3B, the AC power port 140 includes electrical contact pins 158 shielded by a circular shroud. A plug of the extension power cord with corresponding recesses (with conductive pins) for receiving the pins 158 is operably connected to the AC power port 140 to provide AC mains power to the mower 100. The power from the AC mains goes through electrical connections or control circuit part arranged inside the handle part 138, the motor control cable 142 electrically connected with the electrical connections or control circuit part arranged inside the handle part 138, and to the other control circuit part in the main body 102. Figure 3A shows that the motor control cable 142 is led out from the handle part 138 near the middle part of the first handgrip portion 150.

A number of actuator and control buttons are arranged in the handle part 138 as shown in Figures 3A and 3B. In this embodiment, the handle part 138 includes a main actuator 160 in the upper middle part of the first handgrip portion 150. The main actuator 160 is preferably in the form of a spring biased switch. Four secondary trigger-type actuators 162 are arranged on the first handgrip portion 150 on the opposite side of the main actuator, and they can be actuated by the operator from under the handle part 138 during operation. Preferably, the four trigger-type actuators 162 are arranged on different portions of the handle part 138 so that the operator may access these triggers 162 from different angles or positions. In a preferred embodiment, at least one trigger 162 is arranged on each of the first, second and third handgrip portions 150, 152, 154. In the present embodiment, the four triggers 162 are disposed substantially symmetrically about the middle of the first handgrip portion 150, It should be readily appreciated that the number, position and arrangement of the main actuator 160 and the secondary actuators 162 may vary in other embodiments, and yet it is preferable that the secondary actuators are accessible from different angles or positions by the operator.

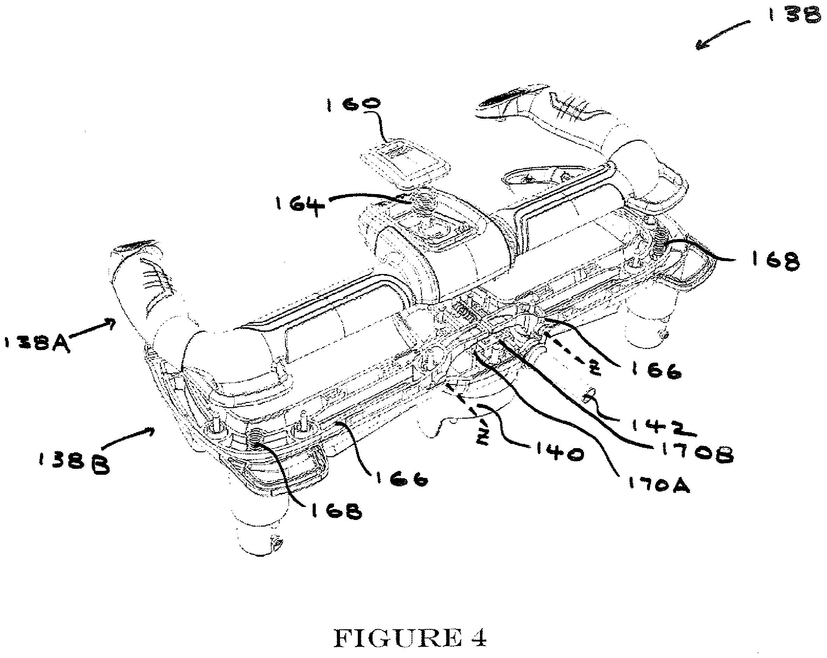

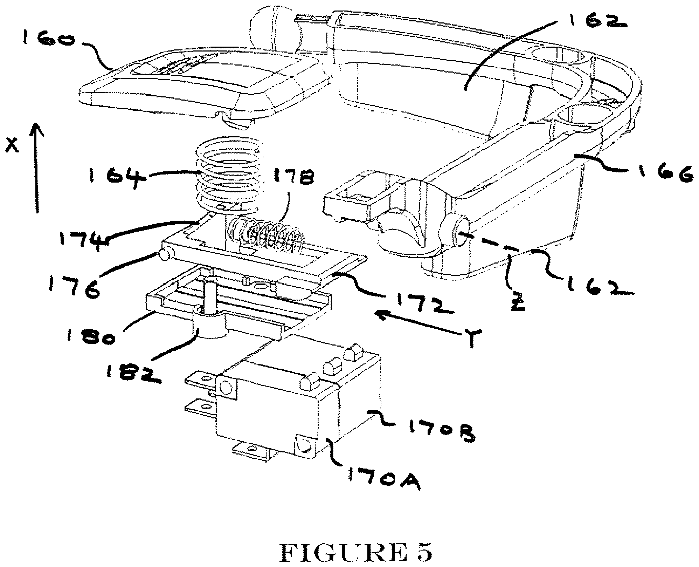

Figure 4 shows a partially exploded view of the handle part 138 of Figures 3A and 3B. As shown in the Figure, handle part 138 is formed of upper and lower casings/halves 138A, 138B that are mounted together through a snap fit connection provided by pins mounted in the lower half 138B of the handle part 138 and corresponding grooves for receiving the pins formed on the upper half 138A of the handle part 138. In the present embodiment, the main actuator 160 is a spring biased switch that is biased by a spring member 164 arranged underneath the switch. In te present embodiment, two pivotable lever arms 166 are arranged in the handle part 138 and are biased by respective spring members 168. The two lever arms 166 are substantially L shaped, extending from a middle part of the first handgrip portion 150 to the end of either the second or the third handgrip portion 152, 154. Each lever arm 166 includes two integrally formed trigger members 162 and these trigger members 162 extend through openings arranged on the lower half 138B of the handle part 138. As can be readily appreciated from the Figure, the four secondary trigger actuators 162 of the present invention are essentially formed by these two lever arms 166. The end 168 or the lever arm 166 in the middle part of the first handgrip portion 150 is arc shaped, and as the lever arm 166 is pivoted, the arc shaped end 168 contacts the switch arrangements underneath, actuating or closing the switches 170A, 170B in the switch arrangement. Further details of the operation of the actuation control mechanism will be described with reference to Figure 5.

Figure 5 shows an exploded view of actuation control mechanism arranged in the handle part 138 of Figures 3A and 3B. For simplicity of illustration, only the key components of the actuation control mechanism are shown in the Figure. In the present embodiment, the actuation control mechanism includes the main actuator 160 and a spring 164 biasing the main actuator in a substantially vertical direction X. The actuation control mechanism also includes a spring biased plate 172 with a ramp platform 174 and two pins 176 at two ends of the plate. Preferably, the spring biased plate 172 is biased by another spring 178 in direction Y substantially perpendicular to the bias of the spring 164 biasing the main actuator 160. A plate seat 180 is provided below the spring biased plate 172 for partially receiving the spring biased plate 172 and for allowing the spring biased plate 172 to slide substantially parallel to the plate seat 180. Two stopping protrusions 182 are formed in the mid portion on lateral sides of the plate seat 180 for engaging with the pins 176 formed on the spring biased plate 172 so as to stop the sliding movement of the spring biased plate 172. Two switches 170A, 170B for controlling an AC portion and a DC portion of the control circuit are arranged beneath the spring biased plate 172 and the lever arm 166. These switches 170A, 170B are actuated when the arc shaped portion 168 of the lever arm 166 contacts and actuates the switches directly or indirectly.

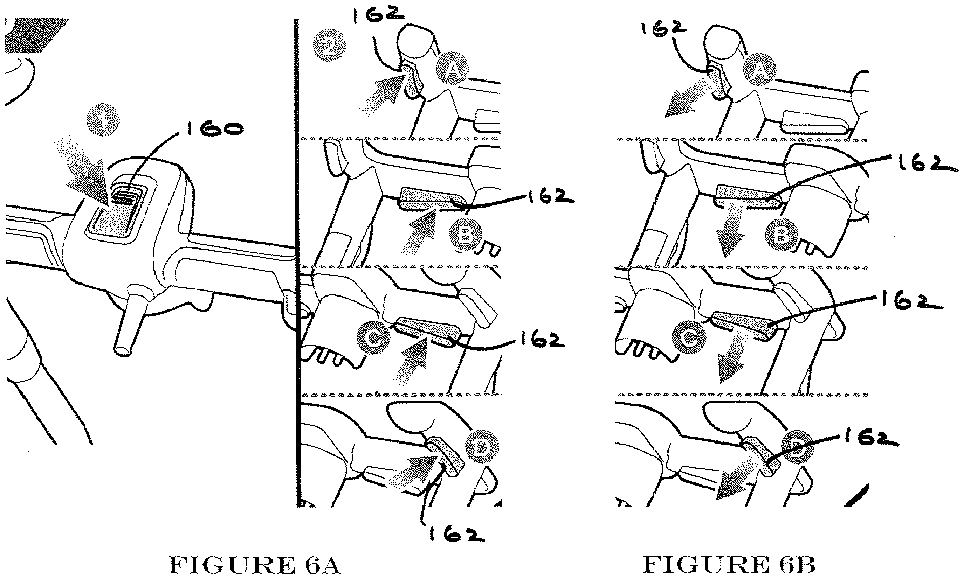

The operation of the actuation control mechanism will now be described with reference to Figures 5 and 6. To actuate the switches 170A, 170B, the operator will first need to press onto the main actuator 160 to overcome the bias of the spring 164 along direction X. As the spring 164 is compressed against direction X, the spring 164 acts on the ramp platform 174 arranged on the spring biased plate 172, and pushes the spring biased plate 172, causing it to move relative to the plate seat opposite to direction Y (substantially perpendicular to direction X) against the bias of the other spring 178. The movement of the spring biased plate 172 is restrained by the nibs 176 formed at the ends of the plate 172 and the protrusions 182 formed in the middle portion of the plate seat 180. The end of the plate 172 opposite to the end with the nibs 176 is now arranged directly above the switches 170A, 170B and is covering the switches 170A, 170B (the switches 170A, 170B are not covered by the spring biased plate 172 unless the spring bias (along direction Y) is overcome by actuating the main actuator 160). The operator can then actuate one of the lever arms 166, by actuating any of the trigger part 162 accessible to him as he desires (depending on his position). By doing so, the lever arm 166 pivots about axis Z and the arc shaped end 168 of the lever arm 166 now pivots and presses onto the spring biased plate 172 and hence onto the switches 170A, 170B. This actuates both switches 170A, 170B at the same time. In a preferred embodiment, the operator can now release his hand from the main actuator 160 without causing actual release of the actuation of the main actuator 160 as the spring biased plate 172 is now locked into place by the arc shaped end 168 of the lever arm that is being continuously actuated by the operator's hand(s). To disconnect or discontinue the operation of the switches 170A, 170B, the operator can simply release the trigger-type actuators 162 and the lever arm 166 will be spring biased back to its originally non-pivoted position about axis Z. The spring biased plate 172, upon release of the lever arm 166, disengages with the arc shaped portion 168 and returns to its original unbiased position thought the bias of spring 178 along direction Y and the main actuator 160 will be released by the movement of the ramp platform releasing the spring 164, allowing the spring 164 to provide bias to the actuator 160 along direction X.

Figures 6A and 6B show the basic operation control of the actuation control mechanism of Figure 5 arranged in the mower 100 of Figure 1. As shown in Figure 6A, to operate the mower 100, the operator first actuates the main actuator 160 by pressing onto the main actuator. The operator then actuates (presses/grips onto) any one of the four trigger type secondary actuators 162 arranged in the handle part 138 when the main actuator 160 remains actuated (pressed/gripped onto). When both of the main actuator 160 and one or more of the four trigger type secondary actuators 162 are actuated, the motor of the mower becomes operative. In a preferred embodiment, after the secondary actuator 162 are depressed or actuated, the operator can release his hands from the main actuator 160 without causing the operation of the motor to cease or be interrupted, as the main actuator 160 remains actuated by the continuous actuation of the secondary actuators 162. The operator's hand that is originally used for actuating the main actuator 160 is now free, and can be used to grip onto any portions of the handle part 138 to maneuver the mower 100 along the floor surface. As shown in Figure 6B, to cease operation of the motor and hence the mover 100, the operator can simply release the secondary actuators 162 that he is gripping for actuating the motor. Preferably, the operator does not have to interact with the main actuator 160 at all to cease operation of the motor, as the main actuator 160 is automatically released following the release of the secondary actuators 162, using the actuation control mechanism as substantially described above.

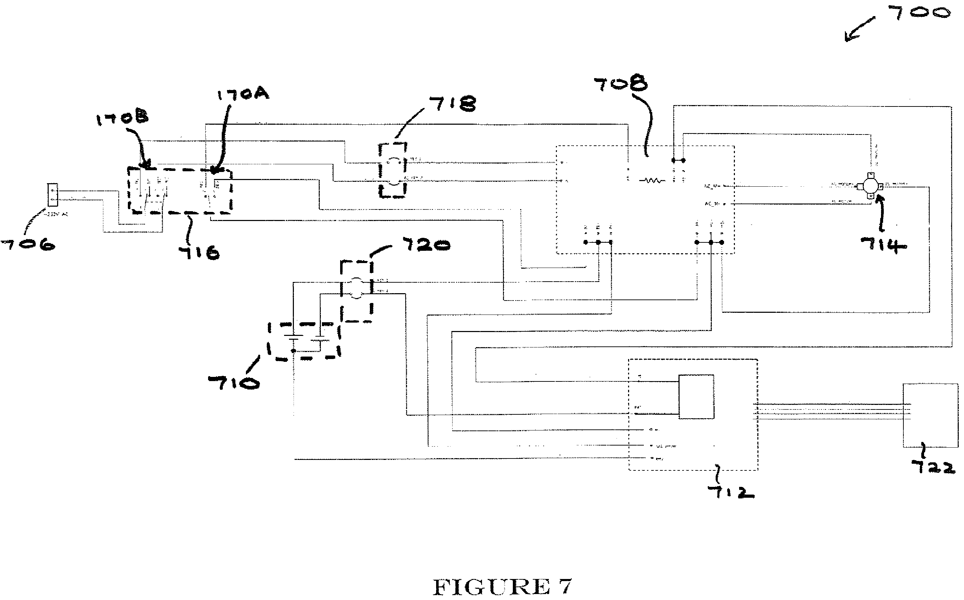

Figure 7 shows a control circuit 700 for controlling the motor of the lawn mower 100 of Figure 1 in accordance with one embodiment of the present invention. The control circuit 700 in the present embodiment is distributed in the mower 100, and it is partly arranged inside the main body 102, and partly arranged inside the handle part 138 of the mower 100.

The control circuit 700 can be basically defined to include an AC portion and a DC portion. The AC portion preferably includes an AC power supply 706 and an AC controller 708; and the DC portion preferably includes a DC power supply 710 and a DC controller 712. Both of the power supplies are operably coupled with the hybrid AC/DC motor 714. In one embodiment, a number of wirings and circuit connections in the control circuit 700 are shared by the AC portion and the DC portion. A primary switch arrangement 716 is arranged in the circuit 700 for controlling the supply of power from the power sources 706, 710 to the motor 714. This primary switch arrangement 716 is preferably the switches 170A, 170B as described with reference to Figures 4 and 5. Two secondary switch arrangements 718, 720 are additionally arranged in the AC portion and DC portion of the control circuits respectively. Preferably, these two secondary switch arrangements 718, 720 comprise the connection ports adapted to receive a fuse key arranged in the power chamber in the main body 102 as described above. An LED circuit controller 722 as well as other controllers and wirings may be arranged in the circuit to facilitate control of other aspects of the mower.

Referring the Figure 7, to operate the motor in a DC mode, the operator first connects one or more battery packs 710 to the power chamber in the main body 102 of the mower. The operator then inserts a fuse key (not shown) into the secondary switch 720 arranged in the DC portion of the circuit to close the switch 720 and hence partially complete the DC circuit loop. When the operator subsequently actuates the actuation control mechanism of Figures 4 and 5, and hence the primary switch arrangement 716 in Figure 7, the DC circuit loop is completed and the DC power source 710 can provide power to power the motor in DC mode.

On the other hand, to operate the motor in AC mode, the operator first connects the mower 100 with an AC mains power source, using a extension cord with plugs plugged into the AC mains socket (or other power source) and the AC power port 140 arranged in the handle part 138 of the mower 100. The operator then inserts a fuse key (not shown) into the secondary switch 718 arranged in the AC portion of the circuit to close the switch 718 and hence to partially complete the AC circuit loop. When the operator subsequently actuates the actuation control mechanism of Figures 4 and 5 and hence the primary switch arrangement 716 in Figure 7, the AC circuit loop is completed and the AC mains power source can provide power to power the motor in AC mode.

It is worthwhile to mention that when the operator actuates the actuation control mechanism of Figures 4 and 5 and hence the primary switch arrangement 716 in Figure 7, the operator is essentially partially completing both the AC and DC portions of the control circuits 700 as the switches 170A, 170B in the primary switch arrangement 716 are actuated at the same time. In the present embodiment, whether the motor is to be powered by AC power and DC power depends not only on the actuation of switches 170A, 170B, but also depends on whether the mower 100 is connected with AC mains or with a battery pack, and/or whether the fuse key is connected to the respective secondary switch arrangement to complete the AC portion or DC portion of the control circuit loop 700.

The embodiments of the actuation control mechanism as well as the associated control circuit in the present invention are advantageous in that they are robust, yet simple and easy to use. The provision of the actuation control mechanism with main and secondary switches provides improved safety of operation to the mower (as both are required to be actuated). Also, the possibility of subsequently releasing the main actuator after the secondary actuators are actuated without interrupting the motor operation enables better control of the mower as both of the operator's hands can be used to grip onto the handle part to manipulate the mower. Also, the provision of a number of secondary actuators along different positions of the handle part allows better manipulation of the mower by the user and the user can access the secondary actuators from different positions and angles, with ease and comfort. On the other hand, the provision of the control circuit associated with the actuation control mechanism allows the hybrid AC/DC motor to be easily manipulated to operate with either AC or DC power is a safe and simple manner. Other advantages of the present invention in terms of cost, construction, function, safety, efficiency, etc. will become apparent to those skilled in the art by referring to the detailed description above.

Although a lawn mower is specifically described in the above embodiments of the present invention, a person skilled in the art would readily appreciate that the actuation control mechanism of the present invention as substantially illustrated and described above may be arranged on any other types of electric power tools, such as hedge trimmer, chain saw, grinder, etc. The power tools arranged with the actuation control mechanism of the present invention are hybrid type power tools with a hybrid AC/DC motor which can operate with both AC power (in AC mode) and DC power (in DC mode).

It will be appreciated by persons skilled in the art that numerous variations and/or modifications may be made to the invention as shown in the specific embodiments without departing from the scope of the invention as claimed. The present embodiments are, therefore, to be considered in all respects as illustrative and not restrictive.

Any reference to prior art contained herein is not to be taken as an admission that the information is common general knowledge, unless otherwise indicated.

## Claims

1. A hybrid AC/DC power tool comprising:
a hybrid AC/DC motor (714) arranged to drive a work element;
a control circuit (700) having
a first switch arrangement (716) that can be actuated for coupling the hybrid AC/DC motor (714) with an AC power source (706) when the AC power source (706) is connected to the hybrid AC/DC power tool and for coupling the hybrid AC/DC motor (714) with a DC power source (710) when the DC power source (710) is connected to the hybrid AC/DC power tool;
a second switch arrangement including
an AC coupling switch (718) that can be actuated for coupling the hybrid AC/DC motor (714) with the AC power source (706) when the AC power source (706) is connected to the hybrid AC/DC power tool, and
a DC coupling switch (720) that can be actuated for coupling the hybrid AC/DC motor (714) with the DC power source (710) when the DC power source (710) is connected to the hybrid AC/DC power tool;
a first actuator (160) and a plurality of second actuators (162), operable to be actuated by an operator of the hybrid AC/DC power tool, for actuating the first switch arrangement (716);
wherein the first actuator (160) and at least one of the plurality of second actuators (162) have to be actuated for actuating the first switch arrangement (716) ;
wherein the plurality of second actuators (162) are accessible from at least two different angles and/or positions by the operator;
wherein both the first switch arrangement (716) and the AC coupling switch (718) have to be actuated to enable power to be supplied from the AC power source (706) to the hybrid AC/DC motor (714) when the AC power source (706) is connected to the hybrid AC/DC power tool; and
wherein both the first switch arrangement (716) and the DC coupling switch (720) have to be actuated to enable power to be supplied from the DC power source (710) to the hybrid AC/DC motor (714) when the DC power source (710) is connected to the hybrid AC/DC power tool.

2. A hybrid AC/DC power tool in accordance with claim 1, wherein the hybrid AC/DC power tool further comprises a handle assembly (128) with a handle part (138), and wherein the first actuator (160) and the plurality of second actuators (162) are arranged on the handle part (138).

3. A hybrid AC/DC power tool in accordance with claim 2, wherein the plurality of the second actuators (162) are arranged separately on different portions of the handle part (138).

4. A hybrid AC/DC power tool in accordance with any one of the preceding claims, wherein the first actuator (160) and the plurality of second actuators (162) are arranged to be actuated by continuous actuation.

5. A hybrid AC/DC power tool in accordance with any one of the preceding claims, wherein after initial actuation of the first actuator (160) and at least one of the plurality of the second actuators (162), continuous actuation of any one of the plurality of second actuators (160) maintains the actuation of the first actuator (160) and hence the actuation of the first switch arrangement (716).

6. A hybrid AC/DC power tool in accordance with any one of the preceding claims, further comprising:
a first connection port arranged to receive an electrical coupling key member for actuating the AC coupling switch (718); and
a second connection port arranged to receive an electrical coupling key member for actuating the DC coupling switch (720).

7. A hybrid AC/DC power tool in accordance with any one of the preceding claims, wherein the control circuit (700) includes an AC control portion and a DC control portion; wherein first switch arrangement (716) comprises a first switch (170A) associated with the AC control portion and a second switch (170B) associated with the DC control portion; and wherein the actuation of the first switch arrangement (716) actuates both the first switch (170A) and the second switch (170B) so as to partially complete both the AC control portion and the DC control portion of the control circuit (700).

8. A hybrid AC/DC power tool in accordance with any one of the preceding claims, wherein the handle assembly (128) is telescopic and is pivotable.

9. A hybrid AC/DC power tool in accordance with any one of the preceding claims, wherein the hybrid AC/DC power tool is a walk-behind type lawn mower (100).

## Patentansprüche

1. Hybrides AC/DC-Elektrowerkzeug, umfassend:
einen hybriden AC/DC-Motor (714), der dazu eingerichtet ist, ein Arbeitselement anzutreiben;
eine Steuerschaltung (700) die aufweist:
eine erste Schalteranordnung (716), die betätigt werden kann, um den hybriden AC/DC-Motor (714) mit einer AC-Stromquelle (706) zu koppeln, wenn die AC-Stromquelle (706) mit dem hybriden AC/DC-Elektrowerkzeug verbunden ist, und um den hybriden AC/DC-Motor (714) mit einer DC-Stromquelle (710) zu koppeln, wenn die DC-Stromquelle (710) mit dem hybriden AC/DC-Elektrowerkzeug verbunden ist;
eine zweite Schalteranordnung, die beinhaltet:
einen AC-Kopplungsschalter (718), der betätigt werden kann, um den hybriden AC/DC-Motor (714) mit der AC-Stromquelle (706) zu koppeln, wenn die AC-Stromquelle (706) mit dem hybriden AC/DC-Elektrowerkzeug verbunden ist, und
einen DC-Kopplungsschalter (720), der betätigt werden kann, um den hybriden AC/DC-Motor (714) mit der DC-Stromquelle (710) zu koppeln, wenn die DC-Stromquelle (710) mit dem hybriden AC/DC-Elektrowerkzeug verbunden ist;
ein erstes Betätigungselement (160) und eine Vielzahl von zweiten Betätigungselementen (162), die in Funktion durch eine Bedienungsperson des hybriden AC/DC-Elektrowerkzeugs dazu betätigt werden kann, die erste Schalteranordnung (716) zu betätigen;
wobei das erste Betätigungselement (160) und mindestens eines aus der Vielzahl von zweiten Betätigungselementen (162) betätigt werden müssen, um die erste Schalteranordnung (716) zu betätigen;
wobei die Vielzahl von zweiten Betätigungselementen (162) aus mindestens zwei verschiedenen Winkeln und/oder Positionen durch die Bedienungsperson zugänglich sind;
wobei sowohl die erste Schalteranordnung (716) als auch der AC-Kopplungsschalter (718) betätigt werden müssen, um die Zufuhr von Strom von der AC-Stromquelle (706) zu dem hybriden AC/DC-Motor (714) zu aktivieren, wenn die AC-Stromquelle (706) mit dem hybriden AC/DC-Elektrowerkzeug verbunden ist; und
wobei sowohl die erste Schalteranordnung (716) als auch der DC-Kopplungsschalter (720) betätigt werden müssen, um die Zufuhr von Strom von der DC-Stromquelle (710) zu dem hybriden AC/DC-Motor (714) zu aktivieren, wenn die DC-Stromquelle (710) mit dem hybriden AC/DC-Elektrowerkzeug verbunden ist.

2. Hybrides AC/DC-Elektrowerkzeug nach Anspruch 1, wobei das hybride AC/DC-Elektrowerkzeug des Weiteren eine Griffanordnung (128) mit einem Griffteil (138) umfasst, und wobei das erste Betätigungselement (160) und die Vielzahl von zweiten Betätigungselementen (162) an dem Griffteil (138) angeordnet sind.

3. Hybrides AC/DC-Elektrowerkzeug nach Anspruch 2,wobei die Vielzahl von zweiten Betätigungselementen (162) separat an unterschiedlichen Abschnitten des Griffteils (138) angeordnet sind.

4. Hybrides AC/DC-Elektrowerkzeug nach einem der vorhergehenden Ansprüche, wobei das erste Betätigungselement (160) und die Vielzahl von zweiten Betätigungselementen (162) dazu eingerichtet sind, durch kontinuierliche Betätigung betätigt zu werden.

5. Hybrides AC/DC-Elektrowerkzeug nach einem der vorhergehenden Ansprüche, wobei nach der anfänglichen Betätigung des ersten Betätigungselements (160) und von mindestens einem aus der Vielzahl der zweiten Betätigungselementen (162) die kontinuierliche Betätigung von einem aus der Vielzahl von zweiten Betätigungselementen (160) die Betätigung des ersten Betätigungselements (160) und damit die Betätigung der ersten Schalteranordnung (716) aufrechterhält.

6. Hybrides AC/DC-Elektrowerkzeug nach einem der vorhergehenden Ansprüche, des Weiteren umfassend:
einen ersten Verbindungsanschluss, der dazu eingerichtet ist, ein elektrisches Kopplungsschlüsselelement zum Betätigen des AC-Kopplungsschalters (718) aufzunehmen; und
einen zweiten Verbindungsanschluss, der dazu eingerichtet ist, ein elektrisches Kopplungsschlüsselelement zum Betätigen des DC-Kopplungsschalters (720) aufzunehmen.

7. Hybrides AC/DC-Elektrowerkzeug nach einem der vorhergehenden Ansprüche, wobei die Steuerschaltung (700) einen Arzt C-Steuerabschnitt und einen DC-Steuerabschnitt beinhaltet; wobei die erste Schalteranordnung (716) einen ersten Schalter (170A), der dem AC-Steuerabschnitt zugehörig ist, und einen zweiten Schalter (170B) umfasst, der dem DC-Steuerabschnitt zugehörig ist; und wobei die Betätigung der ersten Schalteranordnung (716) sowohl den ersten Schalter (170A) als auch der zweiten Schalter (170B) betätigt, um somit sowohl den AC-Steuerabschnitt als auch den DC-Steuerabschnitt der Steuerschaltung (700) teilweise zu vervollständigen.

8. Hybrides AC/DC-Elektrowerkzeug nach einem der vorhergehenden Ansprüche, wobei die Griffanordnung (128) teleskopisch und schwenkbar ist.

9. Hybrides AC/DC-Elektrowerkzeug nach einem der vorhergehenden Ansprüche, wobei das hybride AC/DC-Elektrowerkzeug ein handgeführter Rasenmäher (100) ist.

## Revendications

1. Outil électrique AC/DC hybride comprenant :
un moteur AC/DC hybride (714) disposé pour entraîner un élément de travail ;
un circuit de commande (700) ayant
une première configuration de commutation (716) qui peut être actionnée pour l'accouplement du moteur AC/DC hybride (714) à une source d'alimentation AC (706) lorsque la source d'alimentation AC (706) est connectée à l'outil électrique AC/DC hybride et pour l'accouplement du moteur AC/DC hybride (714) à une source d'alimentation DC (710) lorsque la source d'alimentation DC (710) est connectée à l'outil électrique AC/DC hybride ;
une seconde configuration de commutation comprenant
un commutateur d'accouplement AC (718) qui peut être actionné pour l'accouplement du moteur AC/DC hybride (714) à la source d'alimentation AC (706) lorsque la source d'alimentation AC (706) est connectée à l'outil électrique AC/DC hybride, et
un commutateur d'accouplement DC (720) qui peut être actionné pour l'accouplement du moteur AC/DC hybride (714) à la source d'alimentation DC (710) lorsque la source d'alimentation DC (710) est connectée à l'outil électrique AC/DC hybride ;
un premier dispositif d'actionnement (160) et une pluralité de seconds dispositifs d'actionnement (162), pouvant fonctionner pour être actionnés par un opérateur de l'outil électrique AC/DC hybride, pour l'actionnement de la première configuration de commutation (716) ;
le premier dispositif d'actionnement (160) et au moins l'un de la pluralité des seconds dispositifs d'actionnement (162) devant être actionnés pour l'actionnement de la première configuration de commutation (716) ;
la pluralité des seconds dispositifs d'actionnement (162) étant accessibles à partir d'au moins deux angles différents et/ou positions différentes par l'opérateur ;
à la fois la première configuration de commutation (716) et le commutateur d'accouplement AC (718) devant être actionnés pour permettre à l'énergie d'être alimentée depuis la source d'alimentation AC (706) au moteur AC/DC hybride (714) lorsque la source d'alimentation AC (706) est connectée à l'outil électrique AC/DC hybride ; et
à la fois la première configuration de commutation (716) et le commutateur d'accouplement DC (720) devant être actionnés pour permettre à l'énergie d'être alimentée depuis la source d'alimentation DC (710) au moteur AC/DC hybride (714) lorsque la source d'alimentation DC (710) est connectée à l'outil électrique AC/DC hybride.

2. Outil électrique AC/DC hybride selon la revendication 1, l'outil électrique AC/DC hybride comprenant en outre un ensemble poignée (128) avec une partie poignée (138), et le premier dispositif d'actionnement (160) et la pluralité des seconds dispositifs d'actionnement (162) étant disposés sur la partie poignée (138).

3. Outil électrique AC/DC hybride selon la revendication 2, la pluralité des seconds dispositifs d'actionnement (162) étant disposés séparément sur différentes portions de la partie poignée (138).

4. Outil électrique AC/DC hybride selon l'une quelconque des revendications précédentes, le premier dispositif d'actionnement (160) et la pluralité des seconds dispositifs d'actionnement (162) étant disposés pour être actionnés par actionnement continu.

5. Outil électrique AC/DC hybride selon l'une quelconque des revendications précédentes, après l'actionnement initial du premier dispositif d'actionnement (160) et d'au moins l'un de la pluralité des seconds dispositifs d'actionnement (162), l'actionnement continu de l'un quelconque de la pluralité des seconds dispositifs d'actionnement (160) maintenant l'actionnement du premier dispositif d'actionnement (160) et de là l'actionnement de la première configuration de commutation (716).

6. Outil électrique AC/DC hybride selon l'une quelconque des revendications précédentes, comprenant en outre :
un premier orifice de connexion disposé pour recevoir un élément clé d'accouplement électrique pour l'actionnement du commutateur d'accouplement AC (718) ; et
un second orifice de connexion disposé pour recevoir un élément clé d'accouplement électrique pour l'actionnement du commutateur d'accouplement DC (720).

7. Outil électrique AC/DC hybride selon l'une quelconque des revendications précédentes, le circuit de commande (700) comprenant une portion de commande AC et une portion de commande DC ; la première configuration de commutation (716) comprenant un premier commutateur (170A) associé à la portion de commande AC et un second commutateur (170B) associé à la portion de commande DC ; et le dispositif d'actionnement de la première configuration de commutation (716) actionnant à la fois le premier commutateur (170A) et le second commutateur (170B) afin d'achever partiellement à la fois la portion de commande AC et la portion de commande DC du circuit de commande (700).

8. Outil électrique AC/DC hybride selon l'une quelconque des revendications précédentes, l'ensemble poignée (128) étant télescopique et pivotable.

9. Outil électrique AC/DC hybride selon l'une quelconque des revendications précédentes, l'outil électrique AC/DC hybride étant une tondeuse à gazon poussée (100).
